# EUROPEAN PATENT APPLICATION

(11) **EP 2 782 016 A1**
(43) Date of publication of application: **24.09.2014**
(21) Application number: 14159466.3
(22) Date of filing: 13.03.2014
(51) Int. Cl.: G06F 12/08

(54) **Cache memory device, information processing device, and cache memory control method**

(30) Priority: 21.03.2013 JP 2013059117
(71) Applicant: FUJITSU LIMITED, Kawasaki-shi, Kanagawa 211-8588 (JP)
(72) Inventor: Kokuryo, Takuya, Kanagawa, 211-8588 (JP)
(74) Representative: HOFFMANN EITLE

(57) **Abstract**

A cache memory device includes: a processor; and a main memory and a cache memory coupled to the processer, wherein the processor executes a process includes: obtaining a first address in the main memory; obtaining a first index that indicates a first cache index of the cache memory by a hash function; storing a first tag of the first address in the first cache index; generating a second address, a second tag; obtaining by the hash function a second index that indicates a second cache index of the cache memory; changing the second index so that the second index and the first index match and storing the second tag with a third index that is indicated by the changed second index in the cache memory and in a way that is different from the way in which the tag of the first address is stored.

## Description

### FIELD

The embodiments discussed herein are related to a cache memory device, an information processing device, and a cache memory control method.

### BACKGROUND

In recent years, in order to speed up processing in a computer, a high-speed memory that is called a cache memory, the capacity of which ranges from a few kilobytes to a few megabytes is arranged in a central processing unit (CPU) apart from a main memory. The cache memory is a high-speed small-capacity memory that is used to hide delay caused in the main memory, a bus, and the like when the CPU obtains and updates information such as data and an instruction, and make up for a difference between performance of the CPU or the like and performance of a storage device. When the cache memory is used, the CPU may process data that is read from the main memory to the cache memory at high speed as compared with data on the main memory.

For example, as a system in which the cache memory is used, a system in the related art has been proposed that includes a direct-mapped primary cache memory and a direct-mapped secondary cache memory that has a smaller scale and higher speed than the primary cache memory.

The capacity of the cache memory is represented by the product of an address range in which a cache is searched and associativity of the cache. Here, the address range in which a cache is searched is an index range of the cache. Hereinafter, the address range in which a cache is searched is simply referred to as "address range". In addition, the associativity is also referred to as the number of ways. Generally, from a viewpoint of physical design constraints, the associativity becomes smaller than the address range. In addition, a plurality of pieces of the data the addresses of which in the cache are collided with each other may be stored up to the number of ways of the cache memory.

Software may recognize the structure of a cache and store pieces of data in a direction in which addresses in the cache memory are different (index direction), and pieces of data in a direction in which ways are different (way direction).

In an information processing device, a test is conducted to determine whether a cache memory operates appropriately. In such a test, it is determined whether a normal operation is performed when applying a load to the cache memory. For example, the load that is applied to the cache memory is increased by causing memory access in which addresses are collided with each other in the cache memory, causing an access from an external memory to the cache memory to occur, and causing processing of replacing data in the cache memory to occur. The processing of replacing data in a cache memory is referred to as "replacement".

In addition, in recent years, in order to overcome limitation that the number of ways in the cache memory is smaller than an address range number, a method has been employed in which apparent associativity is increased by introducing a hash function to an address generation circuit in the cache memory. A device in which the hash function is introduced to the address generation circuit has a tendency to have a high hit rate of a cache and low frequency of referencing an external memory as compared with a device in which the hash function is not introduced to the address generation circuit.

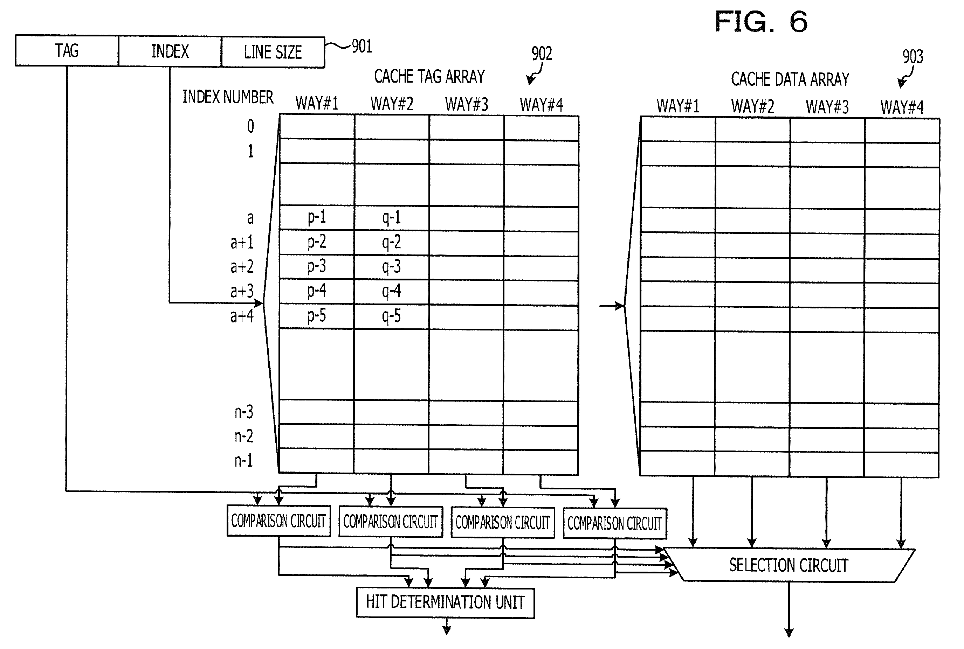

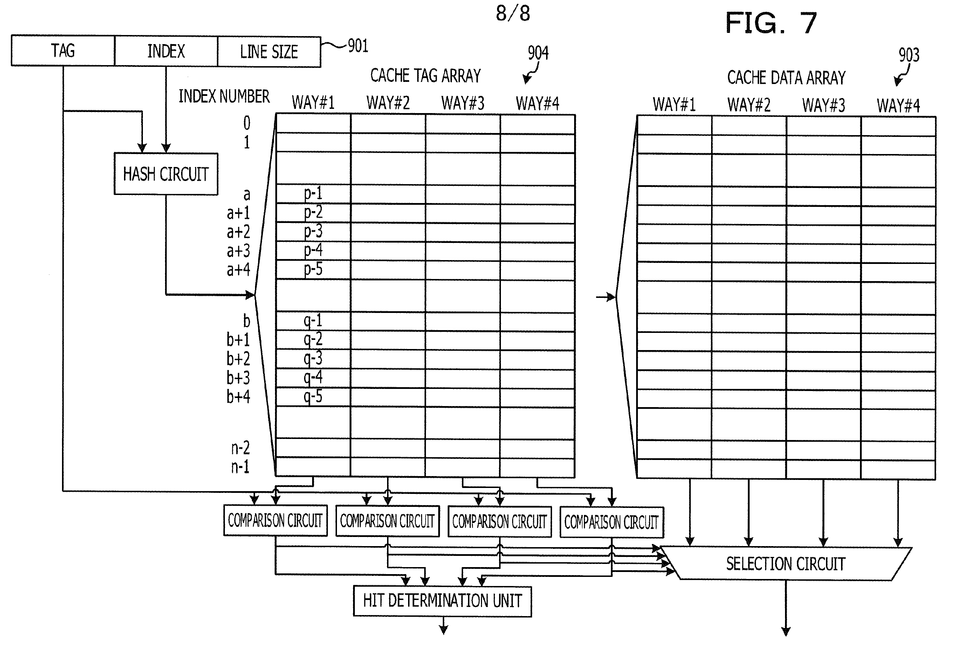

FIG. 6 is a diagram illustrating index calculation when a hash function is not used in the related art. In addition, FIG. 7 is a diagram illustrating index calculation when the hash function is used in the related art.

As illustrated in FIG. 6, a memory address 901 that is specified by the CPU includes a tag and an index. In addition, the cache includes a cache tag array 902 and a cache data array 903. In FIG. 6, "p-1" to "p-5" are tags that are arranged so as to correspond to a series of indexes that start at "a". In addition, "q-1" to "q-5" are also tags that are arranged so as to correspond to a series of indexes that start at "a". When the hash function is not used, pieces of data of the tags "p-1" to "p-5" and pieces of data of the tags "q-1" to "q-5" are stored in entries of different ways of the same index numbers. That is, in the cache tag array 902, as illustrated in FIG. 6, each of the tags "p-1" to "p-5" and each of the tags "q-1" to "q-5" are arranged in the way direction. Therefore, in FIG. 6, in a case in which the hash function is not used, when five pieces of data of addresses having the same indexes are specified, cache mishit occurs.

On the other hand, in a case in which the hash function is used, as illustrated in a cache tag array 904 in FIG. 7, even when each of the tags "p-1" to "p-5" and each of the tags "q-1" to "q-5" are in the same way, the tags are stored in entries of different indexes. Therefore, even when the five pieces of data of addresses having the same indexes are specified before hash, a probability that cache mishit does not occur becomes high as compared with the case in FIG. 6.

Here, in the hash function that is used for the cache memory, an inverse function is not allowed to be obtained from the hash function directly. Therefore, when a test of the cache memory in which the hash function is introduced to generate an address is conducted, it is conceivable that conducting a test program apply a load to the cache memory by using a large amount of memory addresses prepared beforehand in which hash collision occurs.

When a hash function has been published and the algorithm of the hash function is simple, a list of addresses in which hash collision occurs is picked up beforehand using the hash function by software. Therefore, in the test program, a load is applied to the cache memory by executing a memory access instruction using the address that has been picked up beforehand.

However, when a hash function is not published or the algorithm of a hash function is complicated, it is difficult to generate an address in which hash collision occurs, through the software, so that it is difficult to conduct a test of a cache memory in such a method.

For example, in the technology in the related art in which the direct-mapped primary cache memory and the small-scale direct-mapped secondary cache memory are used, the test of a cache memory when the hash is used is not taken into account, and it is difficult to solve the above-described problems.

The technology discussed herein is made by considering the above-described problems, and aims to provide a cache memory device, an information processing device, and a cache memory control method that easily generate hash collision in a cache memory when a load test of the cache memory is conducted.

In the cache memory device, the information processing device, and the cache memory control method according to an embodiment, a cache memory includes a plurality of ways. A first address obtaining unit obtains a first address that is an address on a main memory. A first index management unit obtains a first index that indicates an index of the cache memory from the first address by a hash function, and stores a tag of the first address in the index that is indicated by the first tag in the cache memory. A second address generation unit generates a second address the tag of which is different from that of the first address, from the first address. A second index calculation unit obtains a second index that indicates an index of the cache memory from the second address by the hash function. A determination unit determines whether the first index and the second index are matched to each other. When the determination unit determines that the first index and the second index are not matched to each other, a second index management unit changes the second index so that the second index and the first index are matched to each other and stores a tag of the second address with an index that is indicated by the changed second index in the cache memory and in a way that is different from a way in which the tag of the first address is stored.

In the cache memory device, the information processing device, and the cache memory control method discussed herein, when a load test of a cache memory is conducted, hash collision in the cache memory is caused to occur easily.

The following is reference documents:
[Document 1] Japanese Laid-open Patent Publication No. 05-324473.

### SUMMARY

According to an aspect of the invention, a cache memory device includes: a processor; and a main memory and a cache memory coupled to the processer, wherein the processor executes a process includes: obtaining a first address that is an address in the main memory; obtaining a first index that indicates a first cache index of the cache memory that includes a plurality of ways from the first address by a hash function; storing a first tag of the first address in the first cache index that is indicated by the first index in the cache memory; generating from the first address a second address, a second tag of which is different from the first tag of the first address; obtaining from the second address by the hash function a second index that indicates a second cache index of the cache memory; determining whether the first index and the second index match; and changing the second index so that the second index and the first index match and storing the second tag of the second address with a third index that is indicated by the changed second index in the cache memory and in a way that is different from the way in which the tag of the first address is stored, when the first index and the second index do not match.

### BRIEF DESCRIPTION OF DRAWINGS

FIG. 1 is a block diagram illustrating a cache memory device according to a first embodiment;
FIG. 2 is a diagram illustrating details of a memory address;
FIG. 3 is a flowchart of a test of writing data in the cache memory device according to the first embodiment;
FIG. 4 is a block diagram illustrating a cache memory device according to a second embodiment;
FIG. 5 is a diagram illustrating a hardware structure of the cache memory device;
FIG. 6 is a diagram illustrating index calculation when a hash function is not used in the related art; and
FIG. 7 is a diagram illustrating index calculation when the hash function is used in the related art.

### DESCRIPTION OF EMBODIMENTS

The cache memory device, the information processing device, and the cache memory control method discussed herein are described in detail with reference to accompanying drawings. The embodiments that are described below does not limit the cache memory device, the information processing device, and the cache memory control method discussed herein.

### [First embodiment]

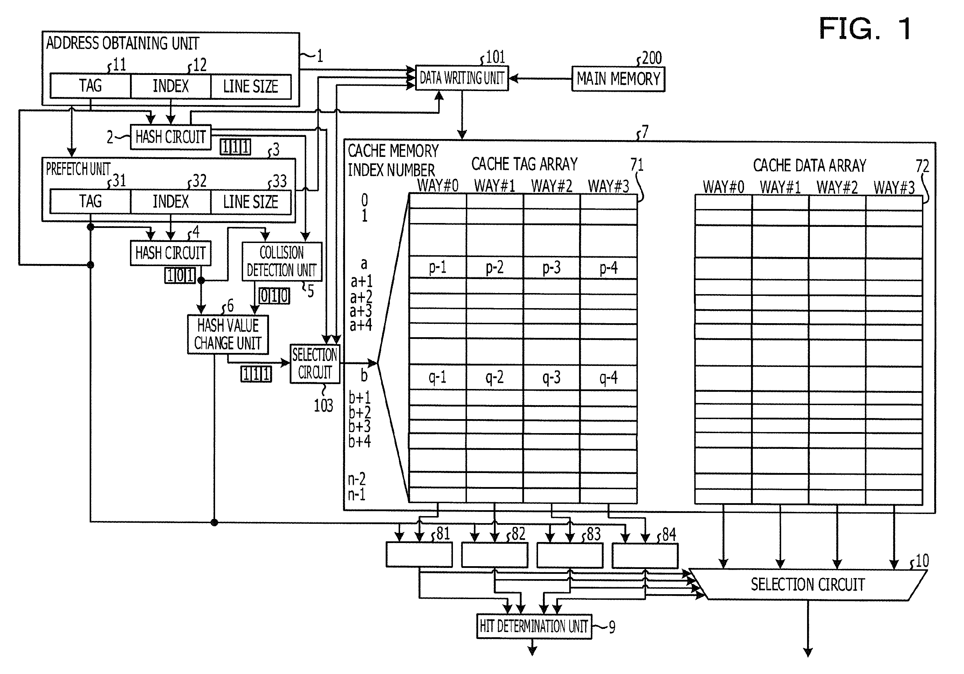

FIG. 1 is a block diagram illustrating a cache memory device according to a first embodiment. As illustrated in FIG. 1, the cache memory device according to the embodiment includes an address obtaining unit 1, a hash circuit 2, a prefetch unit 3, a hash circuit 4, a collision detection unit 5, and a hash value change unit 6. In addition, the cache memory device according to the embodiment includes a cache memory 7, comparison circuits 81 to 84, a hit determination unit 9, and a selection circuit 10.

The address obtaining unit 1 obtains an address on a main memory to read data that is generated by a program to be used to conduct a memory test. Hereinafter, the address that the address obtaining unit 1 obtains from the program for the memory test is referred to as "demand address". The address obtaining unit 1 separates the demand address into a tag 11 and an index 12. The tag 11 indicates information that is used to determine whether data on the main memory, which is specified by the address is stored in the cache.

Bit numbers of the tag 11 and the index 12 are set beforehand, and the address obtaining unit 1 separates the demand address into the tag 11 and the index 12 in accordance with the bit numbers that are set beforehand.

The address obtaining unit 1 outputs a value of the tag 11 to the prefetch unit 3. In addition, the address obtaining unit 1 outputs the value of the tag 11 and a value of the index 12 to the hash circuit 2.

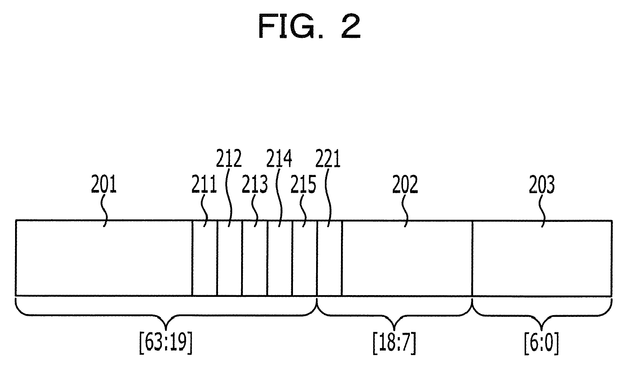

The hash circuit 2 receives inputs of the value of the tag 11 and the value of the index 12 from the address obtaining unit 1. In addition, the hash circuit 2 calculates a hash value for the received values of the tag 11 and the index 12, using a hash function. Here, an example of a hash operation by the hash circuit 2 in the embodiment is described. FIG. 2 is a diagram illustrating the detail of a memory address. The memory address illustrated in FIG. 2 includes a tag 201 and an index 202. Numbers that are illustrated under the memory address so as to correspond to areas represent detailed addresses that are used in the areas. That is, the tag 201 uses 19 to 63-bit of the memory address. The index 202 uses 7 to 18-bit of the memory address. In this case, a line size 203 corresponds to 0 to 6-bit. The hash circuit 2 obtains five 3-bit values 211 to 215 from the index 202 side of the tag 201. In addition, the hash circuit 2 obtains a value 221 from the index 202. The hash circuit 2 calculates a hash value by obtaining exclusive OR (XOR) of the bits of the value 211 to 215, and the value 221.

The hash circuit 2 instructs, to comparison results of the comparison circuits 81 to 84, determination whether a tag is stored in an index having the obtained hash value, that is, determination whether cache hit occurs, in a cache tag array 71 of the cache memory 7. For example, the hash circuit 2 creates a 12-bit index by adding a value that is obtained by removing the leading 3 bits from the index 12, to the 3-bit hash value, or the like. The hash circuit 2 uses the obtained 12-bit index as an index number that is used to search the cache tag array 71. When cache hit does not occur, the hash circuit 2 notifies the comparison circuits 81 to 84 that a tag is not stored. In addition, the hash circuit 2 outputs the obtained hash value to a data writing unit 101. In addition, the hash circuit 2 outputs the obtained hash value to the collision detection unit 5.

The prefetch unit 3 receives a demand address, that is, inputs of the tag 11 and the index 12 from the address obtaining unit 1. The prefetch unit 3 increments the received tag 11 by one each, adds the index 12 to the increment result, and generates a prefetch address. As illustrated in FIG. 1, the prefetch address includes a tag 31 and an index 32. Here, the tag 31 is a value that is generated by incrementing the tag 11 by one each. In addition, the index 32 is matched to the index 12.

The prefetch unit 3 outputs the tag 31 and the index 32 to the hash circuit 4. In addition, when a tag is stored in an index having a hash value that is changed by the hash value change unit 6, the prefetch unit 3 outputs information on the tag to the comparison circuits 81 to 84.

The hash circuit 4 receives the tag 31 and the index 32 from the prefetch unit 3. The hash circuit 4 obtains a value by using the tag 31 and the index 32. Here, in the embodiment, for example, the hash circuit 4 calculates a hash value by obtaining XOR of the five 3-bit values that are obtained from the tag 11 and 3-bit value that is obtained from the index 12, similarly in the hash circuit 2.

The hash circuit 4 outputs the calculated hash value to the collision detection unit 5 and the hash value change unit 6.

The collision detection unit 5 receives an input of the hash value of the demand address from the hash circuit 2. In addition, the collision detection unit 5 receives an input of the hash value of the prefetch address from the hash circuit 4. In addition, the collision detection unit 5 obtains XOR of the hash value of the demand address and the hash value of the prefetch address for the bits. The number columns that are enclosed by the square in FIG. 1 indicate examples of transition of an address. For example, when the hash value of the demand address is "111", and the hash value of the prefetch address is "101", the collision detection unit 5 obtains XOR of the bits to obtain "010". Here, when the hash value of the demand address and the hash value of the prefetch address are matched to each other, that is, when hash collision occurs, the collision detection unit 5 obtains "000" as XOR. In addition, the collision detection unit 5 outputs the obtained XOR to the hash value change unit 6.

The hash value change unit 6 receives an input of the hash value of the prefetch address from the hash circuit 4. Further, the hash value change unit 6 receives from the collision detection unit 5 an input of a result of XOR of the bits of the hash value of the demand address and the hash value of the prefetch address, which is obtained by the collision detection unit 5,. In addition, the hash value change unit 6 obtains XOR of bits of the hash value of the prefetch address, and the result of XOR of bits of the hash value of the demand address and the hash value of the prefetch address. For example, a case is described in which the hash value of the demand address is "111", the hash value of the prefetch address is "101", and the XOR that is obtained by the collision detection unit 5 is "010". In this case, the hash value change unit 6 obtains XOR of "101" and "010" to obtain "111". Here, "111" that is a calculation result by the hash value change unit 6 is matched to the hash value of the demand address "111". That is, the hash value change unit 6 obtains a hash value that is collided with the hash value of the demand address.

When the hash value of the demand address and the hash value of the prefetch address are collided with each other, the hash value change unit 6 receives "000" from the collision detection unit 5. In this case, the hash value change unit 6 obtains XOR of the hash value of the prefetch address and "000", so that the hash value of the prefetch address is obtained as it is. That is, when the hash value of the demand address and the hash value of the prefetch address are collided with each other, the hash value change unit 6 does not change the hash value of the prefetch address.

As described above, the hash value change unit 6 changes the hash value of the prefetch address to a value that is collided with the hash value of the demand address. In addition, the hash value change unit 6 instructs the prefetch unit 3 to generate another prefetch address.

A selection circuit 103 receives an input of the hash value of the demand address from the hash circuit 2. In addition, the selection circuit 103 receives an input of the hash value of the prefetch address from the hash value change unit 6. In addition, the selection circuit 103 receives an input of data to be stored, from the data writing unit 101. The selection circuit 103 transmits an index having the hash value of the demand address, which is received from the hash circuit 2 and the hash value of the prefetch address, which is received from the hash value change unit 6, to the data writing unit 101. In addition, the selection circuit 103 outputs the index of the data, which is received from the data writing unit 101, to the cache memory 7.

When the hit determination unit 9 determines that cache mishit occurs in search using the hash value that is obtained by the hash circuit 2, the data writing unit 101 receives an input of information on the index having the hash value, from the hash circuit 4. In addition, the data writing unit 101 receives an input of the demand address from the address obtaining unit 1. After that, the data writing unit 101 obtains data from the demand address on a main memory 200. In addition, the data writing unit 101 sets a tag to an entry of a vacant way of the index that is obtained from the hash circuit 4 in the cache tag array 71. In addition, the data writing unit 101 writes the obtained data to the entry in a cache data array 72, which corresponds to the index and the way to which the tag is set.

Here, when a tag is set to the cache tag array 71, the data writing unit 101 determines whether there is a vacant entry of each way that corresponds to the obtained index having the hash value. When there is no vacant entry that corresponds to the obtained index having the hash value for all ways, that is, when an entry is running out, the data writing unit 101 selects one of tags that are set to entries that correspond to the index as a replacement target. For example, the data writing unit 101 selects the replacement target by a least recently used (LRU) scheme. In addition, the data writing unit 101 deletes the tag from the entry to which the selected tag is set, and sets the tag 11 to be set.

In addition, in search using the hash value that is obtained by the hash value change unit 6, when the hit determination unit 9 determines that cache mishit occurs, the data writing unit 101 receives an input of information on the index having the hash value, from the hash value change unit 6. Further, the data writing unit 101 receives an input of the prefetch address from the address obtaining unit 1. After that, the data writing unit 101 obtains data from the prefetch address on the main memory 200. In addition, the data writing unit 101 sets a tag to an entry of a vacant way in the index that is received from the hash value change unit 6, in the cache tag array 71. In addition, the data writing unit 101 writes the obtained data to an entry in the cache data array 72, which corresponds to the index and the way to which the tag is set.

In this case, when a tag is set to the cache tag array 71, the data writing unit 101 determines whether there is a vacant entry in each way that corresponds to the index that includes the obtained hash value. In addition, when there is no vacant entry that corresponds to the index that includes the obtained hash values for all of the ways, that is, when an entry is running out, the data writing unit 101 selects one of tags that are set to the entries that corresponds to the index as a replacement target. In addition, the data writing unit 101 deletes the tag from the entry to which the selected tag is set, and sets the tag 31 to be set.

Here, the hash value of the demand address and the hash value of the prefetch address are matched to each other, so that the tag of the demand address and the tag of the prefetch address are set to entries of the same index number. For example, the demand address is represented as "p-1", and the prefetch addresses are represented as "p-2" to "p-5". In this case, hash values of "p-1" to" "p-5" are matched to each other. Therefore, as illustrated in FIG. 1, the tags of "p-1" to "p-4" are set to the entries of the same index number. In FIG. 1, the entries to which the tags of "p-1" to "p-4" are set are represented by "p-1" to "p-4". In this case, for "p-5", the tag is to be set to the entry that includes the same index number, but all of the ways having the index number has been already occupied. As a result, replacement occurs. As described above, even when an index number is generated using a hash function, as long as the cache memory device according to the embodiment is applied, hash collision is caused to occur easily to cause replacement to occur, and a test of the cache memory is conducted swiftly.

The comparison circuits 81 to 84 are arranged so as to correspond to the ways of the cache tag array 71. In FIG. 1, the comparison circuit 81 corresponds to a way #0, the comparison circuit 82 corresponds to a way #1, the comparison circuit 83 corresponds to a way #2, and the comparison circuit 84 corresponds to a way #3.

The comparison circuits 81 to 84 receive an input of the tag 11 of the demand address and an input of the tag 31 of each of the prefetch addresses that are calculated by the prefetch unit 3. In addition, the comparison circuits 81 to 84 receive an instruction of comparison from the hash circuit 2 or the hash value change unit 6. Then, the comparison circuits 81 to 84 determine whether there is a tag that is matched to the input tag 11 or the input tag 31 in the corresponding way. When there is a matched tag in the corresponding way, the comparison circuits 81 to 84 output information on the index and the way to which the matched tag is set, to the hit determination unit 9 and the selection circuit 10.

In addition, the comparison circuits 81 to 84 determine whether a tag is stored in the index that includes the changed hash value by the address that is generated by the hash value change unit 6.

When there is a tag that is matched to the tag 11 or the tag 31, the hit determination unit 9 receives the information on the index and the way to which the matched tag is set, from the comparison circuits 81 to 84. When an input of information on the index and the way is received from any one of the comparison circuits 81 to 84, the hit determination unit 9 determines that hit of data stored in the cache memory occurs. In addition, when there is no input of the information on the index and the way from any one of the comparison circuits 81 to 84, the hit determination unit 9 determines that hit of the data stored in the cache memory does not occur.

When there is a tag that is matched to the tag 11 or the tag 31, the selection circuit 10 receives an input of the information on the index and way to which the matched tag is set, from the comparison circuits 81 to 84. In addition, the selection circuit 10 obtains data from the entry in the cache memory, which is matched to the received index and way. In addition, the selection circuit 10 performs output of the obtained data.

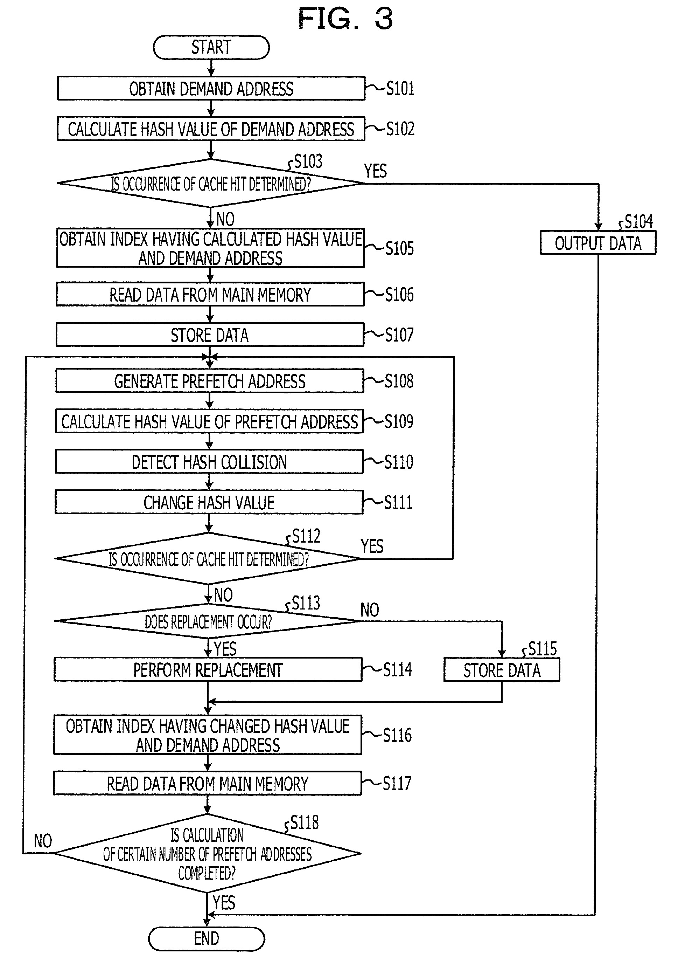

A flow of a cache test in the cache memory device according to the embodiment is described below with reference to FIG. 3. FIG. 3 is a flowchart of the cache test in the cache memory device according to the first embodiment.

The address obtaining unit 1 obtains a demand address (Step S101). The address obtaining unit 1 outputs a tag and an index of the demand address to the hash circuit 2. In addition, the address obtaining unit 1 outputs the demand address to the prefetch unit 3.

The hash circuit 2 receives an input of the demand address from the address obtaining unit 1. After that, the hash circuit 2 calculates a hash value from the tag and the index of the demand address (Step S102). In addition, the hash circuit 2, the comparison circuits 81 to 84, and the hit determination unit 9 search the cache memory 7 using the hash value that is obtained by the hash circuit 2, and determines whether cache hit occurs (Step S103). For example, the comparison circuits 81 to 84 determine whether a tag of an address that is generated by the hash circuit 2 is stored in the index having the hash value in the cache tag array 71. When the tag is not stored in the index, the hit determination unit 9 determines that cache mishit occurs. When the tag is stored in the index, the comparison circuits 81 to 84 compare a value of the tag with a value of each way of an index having the hash value that is obtained by the hash circuit 2. The hit determination unit 9 determines whether cache hit occurs on the basis of the comparison result. When cache hit occurs (Yes in Step S103), data that is stored in the cache memory 7 is read and output from the cache data array 72 (Step S104).

When the hit determination unit 9 determines that cache mishit occurs (No in Step S103), the data writing unit 101 receives information on the index having the hash value, from the hash circuit 2. In addition, the data writing unit 101 obtains a demand address from the address obtaining unit 1 (Step S105). The data writing unit 101 reads data stored in the received demand address on the main memory 200 (Step S106). After that, the data writing unit 101 stores cache data (Step S107). For example, the data writing unit 101 sets a tag to an entry of the index that includes the hash value that is calculated by the hash circuit 2. In addition, the data writing unit 101 stores data in an entry of the cache data array 72, which corresponds to the location in the cache tag array 71, to which the tag is set.

In addition, the hash circuit 2 outputs the calculated hash value to the collision detection unit 5. The prefetch unit 3 receives an input of the demand address from the address obtaining unit 1. Further, the prefetch unit 3 increments a tag of the demand address to generate a prefetch address (Step S108). The prefetch unit 3 outputs the generated prefetch address to the hash circuit 4.

The hash circuit 4 receives an input of the prefetch address from the prefetch unit 3. After that, the hash circuit 4 calculates a hash value from a tag and an index of the received prefetch address (Step S109). In addition, the hash circuit 4 outputs the calculated hash value to the collision detection unit 5 and the hash value change unit 6.

The collision detection unit 5 receives an input of the hash value of the demand address that is generated by the address obtaining unit 1, from the hash circuit 2. In addition, the collision detection unit 5 receives from the hash circuit 4 an input of the hash value of the prefetch address that is calculated by the prefetch unit 3. Further, the collision detection unit 5 obtains XOR of bits of the hash value of the demand address and the hash value of the prefetch address (Step S110). Here, the collision detection unit 5 determines that hash collision occurs when the calculation result of the XOR is "000", and determines that hash collision does not occurs in other cases. In addition, the collision detection unit 5 outputs the calculation result of the XOR to the hash value change unit 6.

The hash value change unit 6 receives from the collision detection unit 5 an input of the calculation result of the XOR of bits of the hash value of the demand address and the hash value of the prefetch address. In addition, the hash value change unit 6 receives an input of the hash value of the prefetch address from the hash circuit 4. The hash value change unit 6 calculates XOR of bits of the hash value of the prefetch address and the calculation result of the XOR of bits of the hash value of the demand address and the hash value of the prefetch address, and changes the hash value (Step S111). In addition, the hash value change unit 6, the comparison circuits 81 to 84, and the hit determination unit 9 search the cache memory 7 using the hash value that is obtained by the hash value change unit 6, that is, the hash value after conversion, and determines whether cache hit occurs (Step S112). For example, the hash value change unit 6 determines whether a tag is stored in an index that includes the obtained hash value in the cache tag array 71. When the tag is not stored in the index, the hit determination unit 9 determines that cache mishit occurs. In addition, when the tag is stored in the index, the comparison circuits 81 to 84 compare a value of the tag with a value of each way of the index having the hash value that is obtained by the hash circuit 2. The hit determination unit 9 determines whether cache hit occurs on the basis of the comparison result.

When the hit determination unit 9 determines that cache mishit occurs (No in Step S112), the data writing unit 101 determines whether replacement occurs due to storage of data for the prefetch address (Step S113). For example, the hash value change unit 6 determines that replacement occurs when there is no vacant way in the index having the value of the calculated XOR. When the replacement occurs (Yes in Step S113), the hash value change unit 6 executes processing of replacing the cache data (Step S114).

On the other hand, when the replacement does not occur (No in Step S113), the data writing unit 101 stores the cache data (Step S115).

In addition, the data writing unit 101 obtains information on the index having the hash value, from the hash value change unit 6. In addition, the data writing unit 101 obtains a prefetch address from the prefetch unit 3 (Step S116). Further, the data writing unit 101 reads data that is stored in the received prefetch address in the main memory 200 (Step S117).

When cache hit occurs (Yes in Step S112), on the contrary, the flow returns Step S108. The prefetch unit 3 determines whether calculation of the certain number of prefetch addresses has been completed (Step S118). When the calculation is not completed yet (No in Step S118), the flow returns to Step S108 in the prefetch unit 3.

In addition, when calculation of the certain number of prefetch addresses has been completed (Yes in Step S118), the prefetch unit 3 terminates calculation of the prefetch address.

Here, in the flowchart of FIG. 3, the calculation of a set of prefetch addresses for a demand address, and the flow of the test in which the demand address and the prefetch addresses are used are described, but practically, a plurality of demand addresses are generated, and the test is conducted by repeating the flow in FIG. 3 for the generated demand addresses.

In addition, in FIG. 3, the case is described in which the processing of generating a prefetch address and storing data in the prefetch address is executed after the processing of storing the data in a demand address, but these pieces of processing may be executed in parallel. In addition, the processing of accessing the main memory 200 and the processing of generating a prefetch address and storing data in the prefetch address may also be executed in parallel.

The test is mainly described herein that causes hash collision to occur, but the information processing device performs a normal operation in addition to the test. That is, except that the test is conducted, the information processing device performs the following operations. The information processing device determines whether data is stored in the cache in response to a received data request, and reads the data from the cache when the data is stored in the cache memory. In addition, when data is not stored in the cache, the information processing device reads data from the memory and stores the read data in the cache. In this case, in the information processing device, it is desirable that the prefetch unit 3 or the like is caused to be disabled. In addition, a hash function is obtained in the hash circuit 2 for the received demand address, and the demand address is transmitted to the comparison circuits 81 to 84 to determine whether there occurs cache hit.

As described above, the cache memory device according to the embodiment generates a plurality of prefetch addresses for the one generated demand address. After that, the cache memory device detects hash collision by obtaining XOR of the generated addresses using hardware, and causes the hash value of the prefetch address to be matched to the hash value of the demand address when hash collision does not occur. After that, the cache memory device sets a tag to an entry having an index that corresponds to the hash values that are matched between the demand address and the prefetch address in order. As a result, when the load test of the cache memory is conducted, hash value collision is caused to occur easily, and the test of the cache memory is conducted swiftly.

### [Second embodiment]

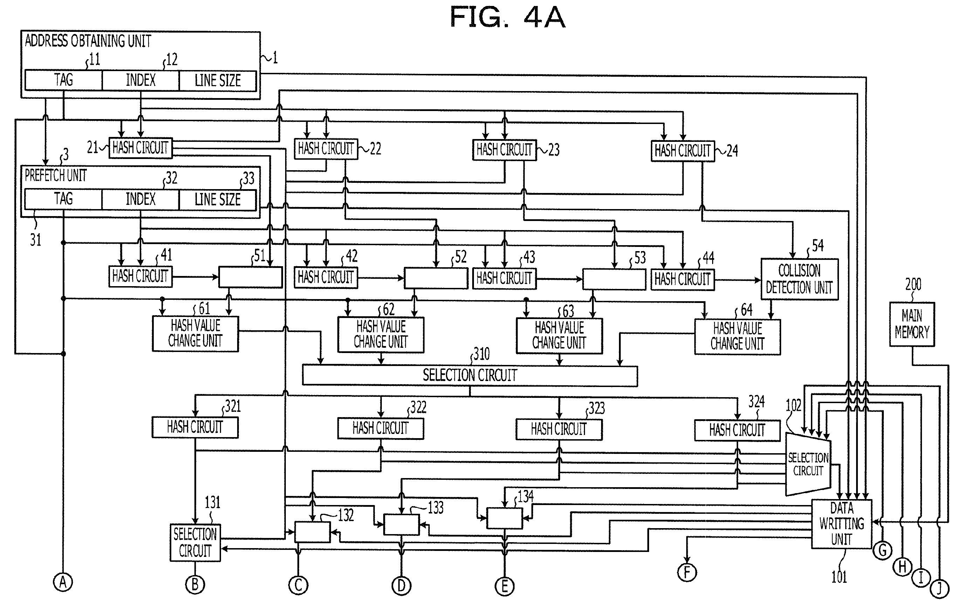

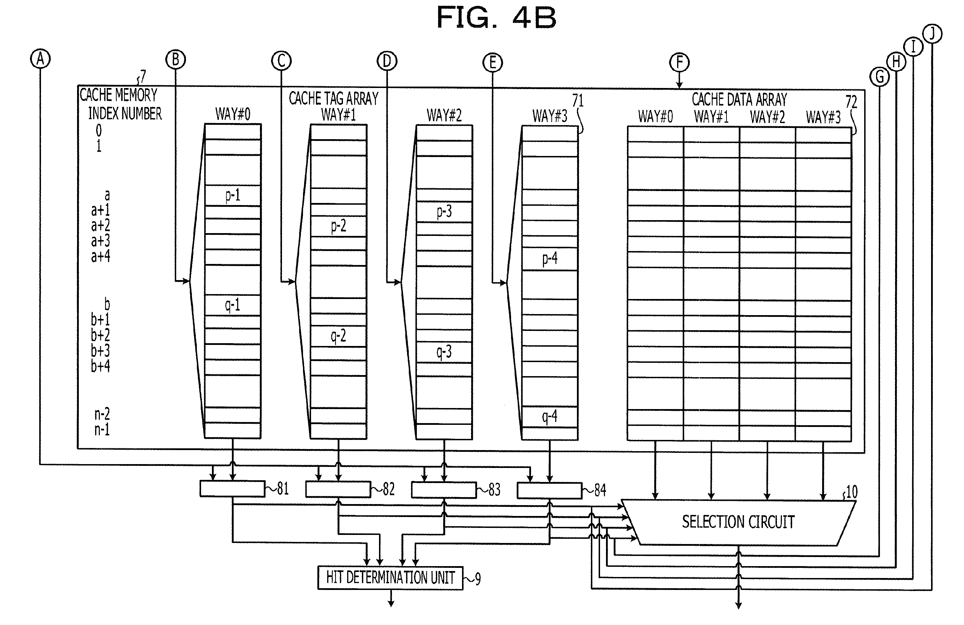

FIG. 4 is a block diagram illustrating a cache memory device according to a second embodiment. The cache memory device according to the second embodiment is different from that of the first embodiment in that a hash function that is different for each way is used. In addition, in the cache memory device according to the second embodiment, in a case in which an entry is running out in a certain index, when hash collision occurs, replacement is not performed for the main memory, and replacement processing of data is executed for entries that include the same index between ways of the cache. Such replacement processing of data between ways of the cache may be referred to as "Victim processing". Hereinafter, descriptions of portions that include the same functions as those of the first embodiment are omitted.

In the embodiment, as illustrated in FIG. 4, hash circuits 21 to 24 are respectively arranged for ways of the cache memory. Here, in the embodiment, a four-way cache memory is described as an example, and the four hash circuits 21 to 24 are provided. In addition, in the cache memory device according to the embodiment, hash circuits 41 to 44, collision detection units 51 to 54, and hash value change units 61 to 64 are arranged so as to respectively correspond to the hash circuits 21 to 24. In addition, in the cache memory device according to the embodiment, a selection circuit 310 and hash circuits 321 to 324 are arranged.

The address obtaining unit 1 outputs a tag 11 and an index 12 of a generated demand address, to the hash circuits 21 to 24. In the embodiment, a case is described in which a demand address is stored in the way #0. In addition, the address obtaining unit 1 outputs the generated demand address to the prefetch unit 3.

The hash circuits 21 to 24 calculate a hash value of the demand address using a hash function that is stored beforehand. The hash circuits 21 to 24 output the calculated hash value to the corresponding collision detection units 51 to 54. In addition, when cache mishit occurs, the data writing unit 101 sets the tag 11 of the demand address to an entry of an index having the hash value in the way #0, and stores data of the demand address in the way #0. In the embodiment, a case is described in which the data of the demand address is stored in the way #0, but the data of the demand address may be stored in any way. The data writing unit 101 sets a tag to an entry of an index having the hash value that is obtained by each of the hash circuits 21 to 24, which corresponds to a way in which data of the demand address is stored. In addition, the hash circuits 21 to 24 output the obtained hash value to selection circuits 131 to 134.

The prefetch unit 3 receives an input of the demand address from the address obtaining unit 1. After that, the prefetch unit 3 calculates a prefetch address by incrementing the tag 11 of the received demand address by one each. In addition, the prefetch unit 3 outputs the first prefetch address to the hash circuit 42 that corresponds to the way #1. In addition, the prefetch unit 3 outputs the second prefetch address to the hash circuit 43 that corresponds to the way #2. In addition, the prefetch unit 3 outputs the third prefetch address to the hash circuit 44 that corresponds to the way #3. In addition, the prefetch unit 3 outputs the fourth prefetch address to the hash circuit 41 that corresponds to the way #0. As described above, the prefetch unit 3 selects an output destination of the prefetch address from the hash circuits 41 to 44 so that a way in which data is stored is changed in order, and performs output of the prefetch address.

The hash circuits 41 to 44 respectively store hash functions same as the hash circuits 21 to 24. Here, the hash circuits 41 to 44 perform a similar operation, so that, the hash circuit 41 is described below as an example. The hash circuit 41 receives an input of the prefetch address from the prefetch unit 3. In addition, the hash circuit 41 calculates a hash value using a hash function for the received tag 31 and index 32 of the prefetch address. After that, the hash circuit 41 outputs the calculated hash value to the collision detection unit 51 and the hash value change unit 61.

The collision detection units 51 to 54 perform a similar operation, so that, the collision detection unit 51 is described below as an example. The collision detection unit 51 receives an input of the hash value of the prefetch address from the hash circuit 41. In addition, the collision detection unit 51 receives an input of the hash value of the demand address from the hash circuit 21.

The collision detection unit 51 obtains XOR of bits of the hash value of the prefetch address and the hash value of the demand address, and outputs the obtained result to the hash value change unit 61. Here, for example, in a case in which the hash value is represented by 3-bit, the collision detection unit 51 determines that hash collision occurs when XOR is "000" and determines that hash collision does not occur when XOR corresponds to the other cases.

The hash value change units 61 to 64 perform a similar operation, so that, the hash value change unit 61 is described below as an example. The hash value change unit 61 receives an input of the prefetch address before hash from the prefetch unit 3. In addition, the hash value change unit 61 receives an input of the calculation result of XOR of bits of the hash value of the prefetch address and the hash value of the demand address, from the collision detection unit 51. In addition, the hash value change unit 61 obtains XOR of bits the prefetch address and the calculation result by the collision detection unit 51. As a result, the hash value change unit 61 obtains a prefetch address that causes hash collision with a demand address to occur. In addition, the hash value change unit 61 inputs the result of XOR, which is the prefetch address that causes hash collision to occur, to the selection circuit 310. Similarly, the hash value change unit 62 to 64 output the obtained prefetch address that causes the hash collision to occur, to the selection circuit 310.

The selection circuit 310 receives an input of the prefetch address that causes has collision to occur, from the hash value change units 61 to 64. In addition, the selection circuit 310 selects one each from the input prefetch addresses, and outputs the selected prefetch address to the hash circuits 321 to 324 in order.

The hash circuits 321 to 324 store different hash functions. The hash circuits 321 to 324 receive an input of the prefetch address. The hash circuits 321 to 324 calculate a hash value of the received prefetch address using the hash function that is stored beforehand. In addition, when there does not occur cache hit in any one of ways that respectively correspond to the hash circuits 321 to 324, the data writing unit 101 performs the following operation. That is, the data writing unit 101 sets the tag 31 of the prefetch address to an entry that corresponds to an index having the hash value in the way that corresponds to one of the hash circuits 321 to 324.

As a result, the hash value of the demand address and the hash value of each of the prefetch addresses are matched to each other. That is, the hash values are calculated using the same value. Therefore, for example, as illustrated in FIG. 4, in the case of the four-way, an entry having the hash value that is calculated using the same value in the four-way is running out by storing one demand address and three prefetch addresses. However, a hash function is different for each of the ways, so that the calculated hash value is different and the used index is different for each of the ways. Therefore, in the embodiment, even when an entry having the hash value that is calculated by using the same value is running out, the data is replaced to an entry of the same index of another way.

For example, a case is described in which "p-1" to "p-4" in FIG. 4 are stored in entries of an index having a hash value that is calculated by using the same value. In this case, when a tag of "p-5" is set to an entry that is same as "p-2", the tag is not allowed to be set as is because "p-2" has been already set. In addition, a tag has been already set to an entry having the hash value that is calculated by the same value even in another way, so that the tag of "p-5" is not allowed to be set as is. Therefore, the data writing unit 101 according to the embodiment stores the tag of "p-5" in the entry in which the tag of "p-2" has been stored by moving "p-2" to an entry having the same value in any one of the ways #0, #2, and #3.

Therefore, even when one demand address and three prefetch addresses are stored in the cache memory, replacement of data does not occur between the cache memory and the main memory 200. Thus, when the prefetch unit 3 generates 15 prefetch addresses at maximum, and the generated 15 prefetch addresses are stored in the hash value change units 61 to 64, data that is not allowed to be stored in the cache memory is generated, and replacement of data occurs. That is, the cache memory device according to the embodiment finally reaches a state in which way-to-way replacement processing of the cache memory is not allowed to be executed, by repeating generation of a prefetch address that causes hash collision with a demand address to occur and storage of the data. As a result, the cache memory device according to the embodiment may cause replacement of data for the main memory to occur.

In addition, the hash circuits 321 to 324 output a result of the obtained XOR to a selection circuit 102 as the hash value of the prefetch address. In addition, the hash circuits 321 to 324 outputs the result of the obtained XOR to the selection circuits 131 to 134 as the hash value of the prefetch address.

The selection circuits 131 to 134 receive an input of the hash value of the demand address, from the hash circuit 2. In addition, the selection circuits 131 to 134 receive an input of the hash value of the prefetch address, from the hash circuits 321 to 324 respectively. In addition, the selection circuits 131 to 134 receive an input of data to be stored, from the data writing unit 101. In addition, the selection circuits 131 to 134 output an index having the hash value of the demand address, which is received from the hash circuit 2, and the hash values of the prefetch addresses, which are received from the hash circuits 321 to 324, to the cache tag array 71. In addition, the selection circuit 103 outputs an index of data that is received from the data writing unit 101, to the cache tag array 71.

The selection circuit 102 receives the calculation results of the XOR that are obtained by the hash circuits 321 to 324 and that correspond to the hash values of the prefetch addresses, from the hash circuits 321 to 324. In addition, the selection circuit 102 receives information on a way in which hit occurs, from the comparison circuits 81 to 84. In addition, the selection circuit 102 outputs the information on the way in which hit occurs in the cache data array 72 and a hash value that corresponds to the way in which hit occurs out of the hash values that are received from the hash circuits 321 to 324, to the data writing unit 101.

For example, when the tag 31 of the prefetch address is set to an index having the hash value that is output from the hash circuit 321, tag-hit occurs in the way #0. Therefore, the selection circuit 102 receives information on the way #0 from the comparison circuit 81. In addition, the selection circuit 102 outputs the information on the way #0 and the hash value that are received from the hash value change unit 61, to the data writing unit 101.

The data writing unit 101 receives an input of the information on the hash value and the way, from the selection circuit 102. In addition, when cache mishit occurs for data that is specified by the demand address, the data writing unit 101 receives an input of the demand address from the address obtaining unit 1. In addition, when cache mishit occurs for data that is specified by the prefetch address, the data writing unit 101 receives an input of the prefetch address from the prefetch unit 3. After that, the data writing unit 101 obtains data from the prefetch address or the demand address on the main memory 200. In addition, the data writing unit 101 writes the obtained data to an entry of the cache data array 72, which is indicated by the index and way that are received from the selection circuit 102.

The comparison circuits 81 to 84 receive an input of information on a tag that is currently being set, out of the tags of the demand address and the prefetch address, from the prefetch unit 3. In addition, the comparison circuits 81 to 84 determine whether there exists the received tag in the corresponding way. When the received tag exists in the corresponding way, the comparison circuits 81 to 84 output information on the way in which the tag exists to the selection circuit 102.

As described above, the cache memory device according to the second embodiment may cause hash collision to occur easily even when a hash function is different for each of the ways and conduct a test of a cache memory swiftly.

In addition, in the above-described second embodiment, the case is described in which the replacement processing of data is executed between ways of the cache memory, but similar effects of the functions in the embodiment are demonstrated even in the cache memory in which a hash function is different for each of the ways without executing such processing. In this case, replacement of data may occur swiftly in the case of the test of the cache memory, as compared with the case in which the replacement processing of data between the ways of the cache memory.

### [Hardware structure]

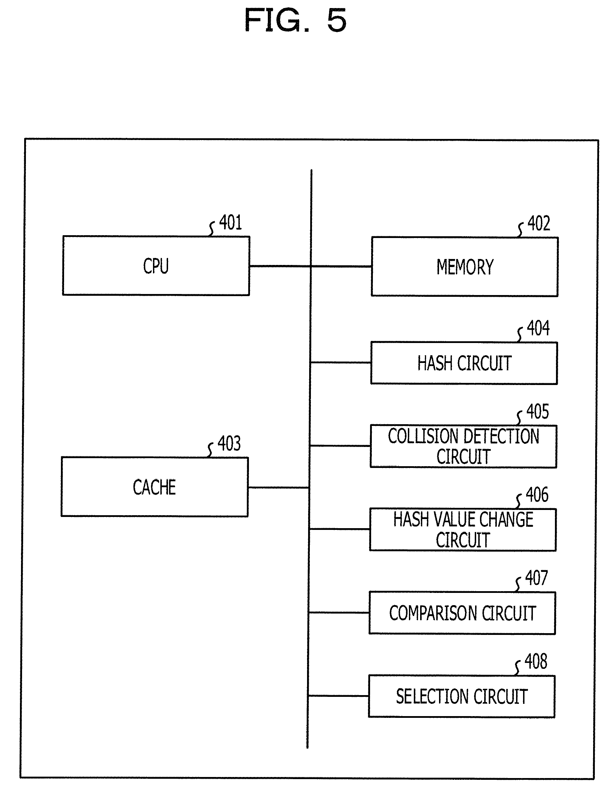

A hardware structure of the above-described cache memory device according to the embodiments is described below with reference to FIG. 5. FIG. 5 is a diagram illustrating a hardware structure of the cache memory device.

The cache memory device according to the embodiment includes a CPU 401, a memory 402, and a cache 403. In addition, the cache memory device includes a hash circuit 404, a collision detection circuit 405, a hash value change circuit 406, a comparison circuit 407, and a selection circuit 408.

The hash circuit 404 obtains functions of the hash circuits 2 and 4 illustrated in FIG. 1, the hash circuits 21 to 24 and 41 to 44 illustrated in FIG. 4, and the like. The collision detection circuit 405 obtains functions of the collision detection unit 5 illustrated in FIG. 1, the collision detection units 51 to 54 illustrated in FIG. 4, and the like. The hash value change circuit 406 obtains functions of the hash value change unit 6 illustrated in FIG. 1, the hash value change units 61 to 64 illustrated in FIG. 4, and the like. The comparison circuit 407 obtains functions of the comparison circuits 81 to 84 illustrated in FIGs. 1 and 4, and the like. The selection circuit 408 obtains functions of the selection circuit 10 illustrated in FIGs. 1 and 4, and the like.

The memory 402 obtains a function of the main memory 200 illustrated in FIGs. 1 and 4.

In addition, the cache 403 obtains a function of the cache memory 7 illustrated in FIGs. 1 and 4. Here, in the embodiment, the cache 403 is arranged outside the CPU 401, but the cache 403 may be arranged inside the CPU 401.

In addition, the CPU 401, the memory 402, and the cache 403 obtain functions of the address obtaining unit 1, the prefetch unit 3, and the data writing unit 101 illustrated in FIGs. 1 and 4. For example, the memory 402 stores various programs that are used to obtain the above-described functions. In addition, the CPU 401 obtains the functions of the address obtaining unit 1, the prefetch unit 3, the data writing unit 101, and the like by reading various programs from the memory 402 and executing the various programs.

## Claims

1. A cache memory device, comprising:
a processor; and
a main memory and a cache memory coupled to the processer, wherein the processor executes a process includes:
obtaining a first address that is an address in the main memory;
obtaining a first index that indicates a first cache index of the cache memory that includes a plurality of ways from the first address by a hash function;
storing a first tag of the first address in the first cache index that is indicated by the first index in the cache memory;
generating from the first address a second address, a second tag of which is different from the first tag of the first address;
obtaining from the second address by the hash function a second index that indicates a second cache index of the cache memory;
determining whether the first index and the second index match; and
changing the second index so that the second index and the first index match and storing the second tag of the second address with a third index that is indicated by the changed second index in the cache memory and in a way that is different from the way in which the tag of the first address is stored, when the first index and the second index do not match.

2. The cache memory device according to claim 1, wherein the processor further executes
obtaining an exclusive OR of the first index and the second index, where the exclusive OR is used as the hash function,
obtaining an exclusive OR of the second index and the obtained exclusive OR of the first index and the second index, and
changing the second index to the obtained exclusive OR.

3. The cache memory device according to claim 1, wherein the processor further executes prefetching the first address to generate the second index.

4. The cache memory device according to claim 3, wherein the processor further executes prefetching the first address by incrementing the first tag of the first address by one to generate the second index.

5. The cache memory device according to claim 1, wherein the processor further executes
obtaining the first index that corresponds to each column using the hash function that is determined for the column beforehand, and storing, in an index that is indicated by one of the obtained first indexes, the first tag of the first address that corresponds to the indexes,
obtaining the second address for each of the ways in order using the hash function that is determined for each of the ways beforehand,
determining whether each of the second indexes matches the first index that is calculated using the hash function that corresponds to a way that corresponds to each of the second indexes, and
changing each of the second indexes to match the first index that is calculated using the hash function that corresponds to the way that corresponds to each of the second indexes, and storing the second tag of each of the second addresses with an index that is indicated by each of the changed second indexes in the cache memory and in the way that corresponds to each of the second indexes.

6. An information processing device, comprising:
a main memory in which a storage location of data is specified by an address that includes a memory tag;
a cache memory that includes a plurality of ways;
a processor coupled to the memory and the cache memory, wherein the processor executes a digital signal process adapted to perform:
obtaining a first address that is an address in the main memory;
obtaining a first index that indicates a first cache index of the cache memory that includes the plurality of ways from the first address by a hash function;
storing a first tag of the first address in the cache index that is indicated by the first index in the cache memory;
generating from the first address a second address, a second tag of which is different from the first tag of the first address;
obtaining from the second address by the hash function a second index that indicates a second cache index of the cache memory;
determining whether the first index and the second index match; and
changing the second index so that the second index and the first index matched and storing the second tag of the second address with an third index that is indicated by the changed second index in the cache memory and in a way that is different from a way in which the first tag of the first address is stored, when the first index and the second index do not match.

7. A cache memory control method, comprising:
obtaining a first address that is an address in a main memory;
obtaining a first index that indicates a first cache index of a cache memory that includes a plurality of ways from the first address by a hash function;
storing a first tag of the first address in the first cache index that is indicated by the first index in the cache memory;
generating from the first address a second address a second tag of which is different from the first tag of the first address;
obtaining from the second address by the hash function a second index that indicates a second cache index of the cache memory;
determining whether the first index and the second index match; and
changing the second index so that the second index and the first index matched and storing the second tag of the second address with a third index that is indicated by the changed second index in the cache memory and in a way that is different from a way in which the first tag of the first address is stored, when the first index and the second index do not match.
